# EUROPÄISCHE PATENTANMELDUNG

(11) **EP 2 759 636 A2**
(43) Veröffentlichungstag der Anmeldung: **30.07.2014**
(21) Anmeldenummer: 14000300.5
(22) Anmeldetag: 28.01.2014
(51) Int. Cl.: D06N 1/00, B29C 43/22

(54) **Marmorierter Bodenbelag auf Linoleum-Basis**

(30) Priorität: 29.01.2013 DE 102013001477
(71) Anmelder: Armstrong DLW GmbH, 74321 Bietigheim-Bissingen (DE)
(72) Erfinder: Wegner, Iris, 40599 Düsseldorf (DE); Wedel, Boris, 74321 Bietigheim-Bissingen (DE); Eisele, Richard, 74321 Bietigheim-Bissingen (DE)
(74) Vertreter: Müller-Boré & Partner Patentanwälte PartG mbB

(57) **Zusammenfassung**

Die vorliegende Erfindung betrifft einen marmorierten Bodenbelag auf Linoleum-Basis, umfassend verpresste Linoleumgranulate bzw. -pellets, die mit einem Thermoplast imprägniert sind, sowie ein Verfahren zur Herstellung des erfindungsgemäßen marmorierten Bodenbelags.

## Beschreibung

Die vorliegende Erfindung betrifft einen marmorierten Bodenbelag auf Linoleum-Basis sowie ein Verfahren zur Herstellung des erfindungsgemäßen marmorierten Bodenbelags. Insbesondere betrifft die vorliegende Erfindung einen marmorierten Bodenbelag auf Linoleum-Basis, umfassend verpresste Linoleumgranulate bzw. -pellets, die mit einem Thermoplast imprägniert sind.

Seit vielen Jahren werden Bodenbeläge auf Linoleum-Basis auf verschiedensten Gebieten nicht zuletzt aufgrund ihrer positiven Ökobilanz eingesetzt. In erster Linie bestehen Linoleum-Bodenbeläge aus natürlichen und nachwachsenden Rohstoffen, wobei die wesentlichen Bestandteile Leinöl, Naturharze, Kalkstein, Holz- und Korkmehl, Jute sowie Farbpigmente darstellen. Seit Jahrzehnten wird das Anwendungsspektrum von Linoleum-Bodenbelägen aufgrund ihrer unterschiedlichsten technischen Eigenschaften immer breiter. Darüber hinaus lassen sich Linoleum-Bodenbeläge mittlerweile auf unterschiedlichste Weise optisch gestalten, wodurch spezielle visuelle Effekte ermöglicht werden.

Gemusterte Linoleum-Bodenbeläge sind seit geraumer Zeit bekannt. Anfangs waren die unregelmäßigen Musterungen aus unterschiedlich gefärbten Bereichen jedoch unscharf, weshalb der gewünschte optische Effekt nicht in zufriedenstellender Weise erzielt werden konnte. Andere Herstellungsprozesse, die eine konturenscharfe Abgrenzung der verschiedenen Farben in den marmorierten Linoleum-Bodenbeläge und somit eine Verbesserung des optischen Erscheinungsbilds erlauben, sind jedoch sehr umständlich. Beispielsweise beschreibt WO 99/04085 ein Verfahren zur Herstellung eines marmorierten Linoleum-Bodenbelags, wobei zunächst verschieden farbige Walzfelle separat hergestellt werden und diese dann flächig verbunden werden. Dieser mehrschichtige Verbund der Walzfelle wird anschließen granuliert oder gemahlen, wobei Teilchen erhalten werden, die aus unterschiedlichen, aneinanderhaftenden Teilen bestehen.

Somit liegt der vorliegenden Erfindung die Aufgabe zugrunde, einen marmorierten Bodenbelag auf Linoleum-Basis bereitzustellen, der ohne Abstriche im optischen Erscheinungsbild auf effiziente und kostengünstige Weise produzierbar ist.

Diese Aufgabe wird durch die in den Ansprüchen gekennzeichneten Ausführungsformen gelöst.

Insbesondere wird ein marmorierter Bodenbelag auf Linoleum-Basis, umfassend verpresste Linoleumgranulate bzw. -pellets verschiedener Farbe, die mit einem Thermoplast imprägniert sind, bereitgestellt.

Überraschender Weise wurde festgestellt, dass wenn Linoleumgranulate bzw. -pellets verschiedener Farbe mit einem Thermoplast, der als Bindemittel fungiert, imprägniert werden, diese, nachdem sie erhitzt und gepresst wurden, auf effiziente Weise ein flaches und zusammenhängendes marmoriertes Linoleumsubstrat ergeben. Dies ermöglicht vorteilhafterweise zum einen eine kostengünstige Produktion von ansonsten nur umständlich und aufwendig herstellbaren marmorierten Bodenbelägen auf Linoleum-Basis. Andererseits wird eine große Freiheit und Vielfältigkeit in der Gestaltung des äußeren Erscheinungsbilds ohne optischen Einbußen ermöglicht.

Gemäß der vorliegenden Erfindung umfasst der marmorierte Bodenbelag auf Linoleum-Basis verpresste Linoleumgranulate bzw. -Peletts verschiedener Farbe, die mit einem Thermoplast imprägniert sind. Erfindungsgemäß fungiert der Thermoplast als Bindemittel.

Erfindungsgemäß ist die Linoleum-Mischmasse, welche noch nicht als Linoleumgranulat bzw. -pellet mit einem Thermoplast imprägniert wurde, nicht beschränkt und umfasst übliche Komponenten, wie mindestens einen Füllstoff und ggf. mindestens ein Färbemittel oder Bindemittel. Als Färbemittel kann diese Linoleum-Mischmasse beispielsweise Pigmente oder andere übliche Färbemittel auf Basis von anorganischen und organischen Farbstoffen enthalten. Als Färbemittel können jegliche natürliche oder synthetische Farbstoffe sowie anorganische oder organische Pigmente, allein oder in beliebiger Kombination, verwendet werden.

Als Füllstoff werden üblicherweise Weichholzmehl und/oder Korkmehl und/oder Kreide, Kaolin, Kieselgur und Schwerspat verwendet, die zudem beispielsweise mit Wasserglas versetzt sein können.

Typischer Weise können erfindungsgemäß weitere Additive, wie Verarbeitungshilfsmittel, UV-Stabilisatoren, Gleitmittel, Dimensionsstabilisatoren und dergleichen in der Linoleum-Zusammensetzung enthalten sein.

Der erfindungsgemäße marmorierte Bodenbelag ist nicht auf eine Ein-SchichtStruktur beschränkt und kann aus mehreren Schichten aufgebaut sein. Ferner kann der marmorierte Bodenbelag auf Linoleum-Basis auf einem Träger bereitgestellt sein, welcher beispielsweise als Wärmeisolierung fungiert. Weitere Schichten wie Schaumschichten können zudem zur Trittschalldämmung und/oder zur Isolierung verwendet werden.

In einer bevorzugten Ausführungsform umfasst der marmorierte Bodenbelag auf Linoleum-Basis ferner eine Schutzschicht bzw. Deckschicht, die vorzugsweise als transparente Schicht das optische Erscheinungsbild nicht beeinflusst. Darüber hinaus kann der marmorierte Bodenbelag auf Linoleum-Basis eine Lackschicht aufweisen, die je nach gewünschter Eigenschaft frei wählbar ist.

Des weiteren weist der erfindungsgemäße marmorierte Bodenbelag auf Linoleum-Basis vorzugsweise weitere Additive auf, die je nach Einsatzgebiet spezielle Eigenschaften hervorrufen. In einer bevorzugten Ausführungsform umfasst der marmorierte Bodenbelag auf Linoleum-Basis ferner Flammschutzadditive, welche den erfindungsgemäßen marmorierten Bodenbelag beispielsweise beständig gegenüber Zigarettenglut machen und/oder dessen Entflammbarkeit erhöhen.

In einer weiteren bevorzugten Ausführungsform werden elektrisch leitfähige

Pigmente in den Linoleumgranulaten bzw. -pellets bereitgestellt. Typischer Weise können solche elektrisch leitfähige Pigmente aus der Gruppe, umfassend elektrisch leitfähige Metalloxide und elektrisch leitfähige organische Polymere, ausgewählt werden. Die Verwendung solcher elektrisch leitfähiger Pigmente ermöglicht die Bereitstellung eines Bodenbelags, welcher elektrisch leitfähig ist und/oder antistatische Eigenschaften aufweist. Gegebenenfalls umfasst der marmorierte Bodenbelag auf Linoleum-Basis ferner antibakterielle Additive.

Erfindungsgemäß ist das thermoplastische Bindemittel, mit welchem die Linoleumgranulate bzw. -pellets imprägniert werden, vorzugsweise ein redispergierbares Polymerpulver. Des Weiteren kann der Thermoplast ein thermoplastisches Elastomer sein. Gemäß der vorliegenden Erfindung kann das thermoplastische Elastomer aus der Gruppe, bestehend aus Acrylaten, thermoplastischen Polyurethanen, thermoplastische Elastomere auf Olefinbasis, welche ggf. vernetzt sein können, und thermoplastische Elastomere auf Styrol-Basis, ausgewählt sein.

In einer besonders bevorzugten Ausführungsform sind die Linoleumgranulate bzw. -pellets mit einem Vinylacetat/Ethylen-Copolymer, vorzugsweise mit einem redispergierbaren Vinylacetat/Ethylen-Copolymer imprägniert. In diesem Zusammenhang können als Beispiele die in WO 2007/093518 beschriebenen thermoplastischen Bindemittel genannt werden.

Des Weiteren stellt die vorliegende Erfindung ein Verfahren zur Herstellung eines marmorierten Bodenbelags auf Linoleum-Basis bereit. Das erfindungsgemäße Verfahren umfasst die Schritte des
- Bereitstellens einer Linoleum-Mischmasse,
- Mahlens und/oder Granulierens der Linoleum-Mischmasse, um Linoleumgranulate bzw. -pellets zu erhalten, wobei die Linoleumgranulate bzw. -pellets verschiedene Farben aufweisen,
- Imprägnierens der Linoleumgranulate bzw. -pellets verschiedener Farben mit einem thermoplastischen Bindemittel, und
- Erhitzens und Pressens dieser imprägnierten Linoleumgranulate bzw. -pellets, um ein flaches und zusammenhängendes marmoriertes Linoleumsubstrat zu erhalten.

Erfindungsgemäß werden die imprägnierten Linoleumgranulate bzw. -pellets vorzugsweise anhand einer Flachbettkaschieranlage, mehr bevorzugt anhand einer Doppelbandpresse, wie beispielsweise Thermofix oder Quickline, in ein flaches und zusammenhängendes marmoriertes Linoleumsubstrat geformt.

Gemäß der vorliegenden Erfindung können im Falle einer Mehrschichtstruktur bzw. im Falle einer Schutzschicht anhand der vorstehend beschriebenen Anwendung von Druck und Temperatur diese Schichten kraftschlüssig miteinander verbunden werden. Die einzelnen Schichten werden typischerweise bei Drücken von etwa 8 bis 30 N/cm² und Temperaturen von etwa 110°C bis 160°C laminiert.

Zudem ermöglicht das erfindungsgemäße Verfahren das Beimischen entsprechender Additive, wie sie vorstehend beschrieben wurden. Die Herstellung der Linoleum-Mischmasse unterliegt erfindungsgemäß keiner Einschränkung und kann nach einer dem Fachmann bekannten Methode erfolgen.

Überraschender und vorteilhafter Weise ermöglicht das erfindungsgemäße Verfahren die Herstellung eines marmorierten Bodenbelags auf Linoleum-Basis auf effiziente und kostengünstige Weise.

## Patentansprüche

1. Marmorierter Bodenbelag auf Linoleum-Basis, umfassend verpresste Linoleumgranulate bzw. -pellets verschiedener Farbe, die mit einem Thermoplast imprägniert sind.

2. Marmorierter Bodenbelag auf Linoleum-Basis nach Anspruch 1, weiter umfassend eine transparente Schutzschicht.

3. Marmorierter Bodenbelag auf Linoleum-Basis nach Anspruch 1 oder 2, weiter umfassend Additive, ausgewählt aus der Gruppe, bestehend aus Flammschutzadditiven, elektrisch leitfähigen Pigmenten und antibakteriellen Additiven.

4. Marmorierter Bodenbelag auf Linoleum-Basis nach einem der Ansprüche 1 bis 3, wobei der Thermoplast ein Vinylacetat/Ethylen-Copolymer ist.

5. Verfahren zur Herstellung eines marmorierten Bodenbelags auf Linoleum-Basis, umfassend die Schritte des
- Bereitstellens einer Linoleum-Mischmasse,
- Mahlens und/oder Granulierens der Linoleum-Mischmasse, um Linoleumgranulate bzw. -pellets zu erhalten, wobei die Linoleumgranulate bzw.
-pellets verschiedene Farben aufweisen,
- Imprägnierens der Linoleumgranulate bzw. -pellets verschiedener Farben mit einem thermoplastischen Bindemittel, und
- Erhitzens und Pressens dieser imprägnierten Linoleumgranulate bzw. -pellets, um ein flaches und zusammenhängendes marmoriertes Linoleumsubstrat zu erhalten.

6. Verfahren zur Herstellung eines marmorierten Bodenbelags auf Linoleum-Basis nach Anspruch 5, wobei die imprägnierten Linoleumgranulate bzw. -pellets mit einer Doppelbandpresse in ein marmoriertes Linoleumsubstrat geformt werden.
